# EUROPÄISCHE PATENTANMELDUNG

(11) **EP 4 776 508 A1**
(43) Veröffentlichungstag der Anmeldung: **15.07.2026**
(21) Anmeldenummer: 26150738.8
(22) Anmeldetag: 08.01.2026
(51) Int. Cl.: H02S 20/23, F24S 40/00, H02S 40/12, H02S 40/40, E04D 13/10

(54) **SCHNEEFANGSYSTEM MIT HEIZUNG**

(30) Priorität: 08.01.2025 AT 500042025
(71) Anmelder: Sol4F GmbH, 4222 Langenstein (AT)
(72) Erfinder: SONNBERGER, Hubert, 4614 Marchtrenk (AT)
(74) Vertreter: Burger, Hannes Alfred

(57) **Zusammenfassung**

Die Erfindung betrifft ein Schneefangsystem (1) und eine Photovoltaikanlage (5) mit dem Schneefangsystem (1) zum Abtauen von Photovoltaikmodulen (2) der Photovoltaikanlage (5), wobei das Schneefangsystem (1) wenigstens ein Schneefangprofil (3) und einen elektrischen Heizdraht (4) umfasst, wobei das wenigstens eine Schneefangprofil (3) einen ersten Schenkel (7) und einem, zum ersten Schenkel (7) in einem Winkel, insbesondere in einem Winkel von 90°, ausgerichteten zweiten Schenkel (8) umfasst, wobei eine Montageschnittstelle (6) am ersten Schenkel (7) ausgebildet ist und eine Halteschnittstelle (9) für den elektrischen Heizdraht (4) am zweiten Schenkel (8) ausgebildet ist, wobei das Schneefangsystem (1) lastabtragend an wenigstens einem Photovoltaikmodul (2) festgelegt bzw. positionsfixiert ist.

## Beschreibung

Die Erfindung betrifft ein Schneefangprofil und ein Schneefangsystem für Photovoltaikmodule, umfassend ein Schneefangprofil und einen elektrischen Heizdraht.

Ein gattungsgemäßer Schneefang ist aus DE202023000508U1 bekannt geworden. Die Gebrauchsmusterschrift offenbart eine Schneebremse für Photovoltaikmodule, die Schnee sicher auf den Modulen fixiert und somit Gefahren durch herabfallenden Schnee verhindert. Das System besteht aus speziell geformten Haken aus korrosionsbeständigem Material und einer Glasplatte aus Einscheiben-Sicherheitsglas. Es wird ohne Werkzeug zwischen den Modulen montiert und ist sowohl für bestehende als auch neue Anlagen geeignet. Durch die spezifische Konstruktion entstehen weder Schattenwurf noch Leistungseinbußen der Module. Bekannte Lösungen wie die vorhergehend erwähnte haben jedoch den Nachteil, dass sie nicht zum Abtauen geeignet sind und mit der Unterkonstruktion für die Photovoltaikmodule gekoppelt sind.

Aufgabe der vorliegenden Erfindung war es, die Nachteile des Standes der Technik zu überwinden und eine Vorrichtung und ein System umfassend die Vorrichtung zur Verfügung zu stellen, mittels derer Photovoltaikmodule der Montagekategorie Aufdach-Montage abgetaut werden können, wobei weiterhin das Abrutschen von Schnee oder Eis entlang einer Oberfläche eines Photovoltaikmoduls verhindert wird, aber weiters auch noch die Lastabtragung vorteilhaft gestaltet ist.

Diese Aufgabe wird durch ein Schneefangprofil und ein Schneefangsystem umfassend wenigstens ein solches Schneefangprofil gemäß den Ansprüchen gelöst.

Das erfindungsgemäße Schneefangprofil ist zur Montage an einem Photovoltaikmodul geeignet und umfasst einen ersten Schenkel und einen, zum ersten Schenkel in einem Winkel, insbesondere in einem Winkel von 90°, ausgerichteten zweiten Schenkel, wobei eine Montageschnittstelle am ersten Schenkel ausgebildet ist und eine Halteschnittstelle für einen elektrischen Heizdraht am zweiten Schenkel ausgebildet ist, wobei das Schneefangprofil mittels der Montageschnittstelle relativ zum Photovoltaikmodul positionsfixierbar ist, wodurch wein Montagezustand definiert ist.

Dadurch kann das Photovoltaikmodul auf einfach und effektive Weise abgetaut werden, wobei insbesondere Schnee, der auf dem Photovoltaikmodul niedergeschlagen ist, abgetaut und/oder zum Abrutschen oder zumindest zum Weiterrutschen gezwungen werden kann.

Des Weiteren kann es zweckmäßig sein, wenn als Montageschnittstelle im ersten Schenkel ein Durchbruch ausgebildet ist, wobei ein Befestigungsmittel durch den Durchbruch durchführbar ist, wobei der erste Schenkel des Schneefangprofils mittels dem Befestigungsmittel im Zusammenwirken mit einem Klemmelement gegen eine Rückseite des Photovoltaikmoduls anpressbar ist, sodass der erste Schenkel des Schneefangprofils relativ zum Photovoltaikmodul an dessen Rückseite klemmend festlegbar bzw. positionsfixierbar ist.

In diesem Zusammenhang kann der Durchbruch insbesondere als, in eine Längsrichtung des Schneefangprofils ausgebildetes Langloch ausgebildet sein, sodass die Montageposition in Längsrichtung des Schneefangprofils flexibel festlegbar ist. Insbesondere kann in diesem Zusammenhang vorgesehen sein, dass das Schneefangprofil in Längserstreckung eine Vielzahl an Durchbrüchen als Montageschnittstelle umfasst, sodass das Schneefangprofil an mehreren Stellen relativ zum Photovoltaikmodul festlegbar ist. Dies bringt den Vorteil, dass das Schneefangprofil lastabtragend mit dem Photovoltaikmodul verbunden ist. Somit bleibt eine Unterkonstruktion, die zur Dachmontage des Photovoltaikmoduls vorgesehen ist, von einer Last, die durch den Schneefang oder das Wirken des Schneefangs induziert ist, unberührt. Das ist rechtlich hinsichtlich Haftungsfragen vorteilhaft aber hat auch die technisch vorteilhafte Wirkung, dass die Last, die durch den Schneefang oder das Wirken des Schneefangs induziert ist, vollständig vom Photovoltaikmodul aufnehmbar ist, wobei das Photovoltaikmodul bereits entsprechend örtlichen Gegebenheiten auf eine bestimmungsgemäße Traglast ausgelegt ist.

Ferner kann vorgesehen sein, dass der zweite Schenkel im Montagezustand mit einem Photovoltaikmodul eine Oberfläche des Photovoltaikmoduls mit einem Überstandsbereich überragbar bzw. überstehend ausgebildet ist, um als Schneefang zu wirken bzw. das Abrutschen oder Abgleiten von Schnee oder Eis entlang der Oberfläche des Photovoltaikmoduls zu erschweren oder zu unterbinden.

Somit hat das Schneefangprofil eine Wirkung entgegen dem Abrutschen von Schnee überhalb des Photovoltaikmoduls. Im Allgemeinen reicht zum Verhindern des Abrutschens von Schnee bereits eine Erstreckung des Überstandsbereiches von mindestens 2 cm. Jedoch kann der Überstandsbereich eine Erstreckung von bis zu 15 cm über der Oberfläche des Photovoltaikmoduls aufweisen, je nachdem mit welcher Blechstärke das Schneefangprofil ausgestaltet ist. Als besonders vorteilhaft hat sich eine Erstreckung des Überstandsbereichs aus einem Bereich von 2 cm bis 7 cm erwiesen, da in diesem Fall ausreichend Platz für den elektrischen Heizdraht vorgesehen ist, und der Schnee in ausreichendem Maße am Abrutschen gehindert wird. Vorzugsweise ist der elektrische Heizdraht am zweiten Schenkel in Projektion der Oberfläche des Photovoltaikmoduls auf den ersten Schenkel in dessen Montagezustand angeordnet. Somit kann ein Schneebrett entlang der Oberfläche des Photovoltaikmoduls in dessen unterstem Bereich mit dem elektrischen Heizdraht in Berührung gebracht werden, um den Schnee effektiv schmelzen zu könne. Der Überstandsbereich des zweiten Schenkel wirkt in Wirkverbindung mit dem elektrischen Heizdraht auch als Heizfläche, sodass der Schnee auf effektivere Weise abgeschmolzen werden kann.

Darüber hinaus kann vorgesehen sein, dass als Halteschnittstelle für den elektrischen Heizdraht eine Anschlusslasche im zweiten Schenkel des Schneefangprofils ausgebildet ist, wobei die Anschlusslasche teilweise aus dem ersten Schenkel konturgebend durch einen Teilkonturdurchbruch getrennt und über einen Steg mit dem zweiten Schenkel verbunden ausgebildet ist, sodass die Halteschnittstelle durch werkzeugloses Auskragen der Anschlusslasche relativ zum ersten Schenkel für das Aufnehmen des elektrischen Heizdrahtes ausbildbar ist.

Dadurch wird eine definierte Halteschnittstelle für den elektrischen Heizdraht geschaffen. Insbesondere sind mehrere solcher Anschlusslaschen entlang einer Längsrichtung des zweiten Schenkels bzw. des Schneefangprofils vorgesehen. Es hat sich als vorteilhaft erwiesen etwa zwei, drei oder vier, insbesondere aber drei solcher Anschlusslaschen entlang der Längsrichtung im Bereich eines Photovoltaikmoduls vorzusehen.

Es kann auch vorgesehen sein, dass sich ein Schneefangprofil über mehrere Photovoltaikmodule erstreckt, wobei das Schneefangprofil jeweils im Bereich eines Stoßes zwischen zwei Photovoltaikmodule mit Befestigungsmittel und Klemmelement entsprechend vorhergehender Beschreibung an bzw. gegen die Rückseite der Photovoltaikmodule gepresst bzw. angepresst ist bzw. wird. Somit kann ein Schneefangprofil auch an einer jeweiligen Rückseite von zwei nächstliegenden Photovoltaikmodulen klemmend festgelegt sein. In diesem Zusammenhang ist insbesondere zu erwähnen, dass ein erfindungsgemäßes Schneefangprofil für eine Positionierung in horizontaler Bahnenrichtung relativ zu Photovoltaikmodulen vorgesehen ist und dementsprechend nicht für eine Positionierung entlang einer Spornrichtung oder einer Spornrichtung.

Vorteilhaft ist auch eine Ausprägung, gemäß welcher vorgesehen sein kann, dass die Anschlusslasche einen Biegebereich umfasst, wobei die Anschlusslasche durch den Biegebereich insbesondere mittig geteilt ist, sodass die Anschlusslasche im Biegebereich werkzeuglos verbiegbar ist, sodass der elektrische Heizdraht nach Aufnahme in der Halteschnittstelle durch Verbiegen der Anschlusslasche im Biegebereich zwischen der Anschlusslasche und dem zweiten Schenkel festlegbar ist.

Dadurch kann der elektrische Heizdraht relativ zum zweiten Schenkel festgelegt bzw. unverrutschbar positionsfixiert werden. Dies ist hinsichtlich der Belastungen, denen Schneefangprofil und elektrischer Heizdraht im Montagezustand ausgeliefert sind, vorteilhaft. Beispielsweise erfährt das Schneefangprofil im Montagezustand saisonal bedingte und mitunter stark unterschiedlichen Längenausdehnungen auf Grund dessen bevorzugter Materialwahl aus unlegiertem Aluminium und dessen Wärmeausdehnungskoeffizienten. Dieser Wärmeausdehnungskoeffizient kann von einem weiteren Wärmeausdehnungskoeffizienten des elektrischen Heizdrahtes stark unterschiedlich sein. Durch das Festlegen des elektrischen Heizdrahtes mittels der Anschlusslaschen kann derselbe nicht auf Grund der unterschiedlichen Wärmeausdehnungskoeffizienten aus dem Halteabschnitt entfernt werden bzw. daraus abgleiten oder abrutschen. Somit bietet das Schneefangprofil die Grundlage für ein Schneefangsystem mit elektrischen Heizdraht, das wartungsfrei ist.

Hinsichtlich des Wärmeausdehnungskoeffizienten des Schneefangprofils kann vorgesehen sein, dass entlang einer horizontalen Bahnenrichtung von nächstliegend aneinandergereihten Photovoltaikmodulen mehrere einzelne Schneefangprofile aneinandergereiht und insbesondere miteinander gekoppelt vorgesehen sind. Zwei nächstliegend aneinandergereihte Schneefangprofile können dabei mittels einem Winkelprofil gekoppelt sein, wobei für die Kopplung eines jeweiligen Schneefangprofils mit dem Winkelprofil ein vorliegender Durchbruch der Montageschnittstelle verwendbar sein kann, das insbesondere vorgesehen sein kann, dass das Schneefangprofil in Längserstreckung eine Vielzahl an Durchbrüchen als Montageschnittstelle umfasst, sodass das Schneefangprofil an mehreren Stellen relativ zum Photovoltaikmodul festlegbar ist oder eben mittels Winkelprofil mit einem nächstliegendem Schneefangprofil gekoppelt werden kann.

Gemäß einer Weiterbildung ist es möglich, dass der Teilkonturdurchbruch überwiegend im Überstandsbereich ausgebildet ist, sodass der elektrische Heizdraht abschnittsweise im Überstandsbereich montierbar ist.

Somit kann der elektrische Heizdraht im Montagezustand des Schneefangprofils mit einem Photovoltaikmodul im Bereich einer Projektion der Oberfläche des Photovoltaikmoduls auf den zweiten Schenkel angeordnet sein, wodurch ein besonders effektives Abschmelzen von Schnee oder Eis auf der Oberfläche des Photovoltaikmoduls erwirkt werden kann.

Ferner kann es zweckmäßig sein, wenn das Schneefangprofil aus unbeschichtetem Aluminium ausgebildet ist.

Da ein Photovoltaikmodul in der Regel einen Rahmen aus unbeschichtetem Aluminium aufweist, erweist sich die Materialpaarung mit dem Schneefangprofil aus unbeschichtetem Aluminium als vorteilhaft, weil dadurch eine verbesserte Klemmwirkung zwischen Schneefangprofil und Unterseite des Photovoltaikmoduls bzw. dessen Rahmen erreichbar ist.

Erfindungsgemäß ist weiters noch ein Schneefangsystem zum Abtauen eines Photovoltaikmoduls umfassend wenigstens ein Schneefangprofil gemäß der vorhergehenden Beschreibung und einen elektrischen Heizdraht vorgesehen, wobei das wenigstens eine Schneefangprofil einen ersten Schenkel und einem, zum ersten Schenkel in einem Winkel, insbesondere in einem Winkel von 90°, ausgerichteten zweiten Schenkel umfasst, wobei eine Montageschnittstelle am ersten Schenkel ausgebildet ist und eine Halteschnittstelle für den elektrischen Heizdraht am zweiten Schenkel ausgebildet ist, dadurch gekennzeichnet, dass das Schneefangsystem lastabtragend an wenigstens einem Photovoltaikmodul festgelegt bzw. positionsfixiert ist. Ein derartiges Schneefangsystem bietet die bereits vorhergehend beschriebenen Vorteile.

Darüber hinaus kann vorgesehen sein, dass als Montageschnittstelle im ersten Schenkel ein Durchbruch ausgebildet ist, wobei ein Befestigungsmittel durch den Durchbruch durchführbar ist, wobei der erste Schenkel des Schneefangprofils mittels dem Befestigungsmittel im Zusammenwirken mit einem Klemmelement gegen Rückseiten von zwei nächstliegenden Photovoltaikmodulen anpressbar ist, sodass der erste Schenkel des Schneefangprofils relativ zu den Photovoltaikmodulen an deren Rückseite klemmend festlegbar bzw. positionsfixierbar ist, wobei das Klemmelement vorzugsweise an Rahmenabschnitten im Bereich einer Fuge zwischen zwei nächstliegenden Photovoltaikmodulen montierbar ist.

Des Weiteren kann vorgesehen sein, dass das Schneefangsystem durch wenigstens zwei mittels Winkelprofil gekoppelten Schneefangprofilen gekennzeichnet ist, wobei jedes Schneefangprofile mehrere Durchbrüche der Montageschnittstelle umfasst, die als Langloch ausgebildet sind und wobei Durchbrüche der Montageschnittstelle für die Kopplung vorgesehen sind, sodass die Wärmeausdehnung der Schneefangprofile im Bereich des Winkelprofils aufnehmbar ist und sodass das Schneefangsystem auf eine beliebige Länge eine horizontal verlaufenden Bahn von Photovoltaikmodulen verlängerbar ist.

Gemäß einer besonderen Ausprägung ist es möglich, dass der elektrische Heizdraht als abgeflachter Heizdraht ausgebildet ist und mit einer Flachseite parallel zum zweiten Schenkel eines Schneefanprofils positioniert ist, sodass eine Heizfläche des elektrischen Heizdrahtes in Höhenrichtung vergrößert ist.

Somit entsteht eine vergrößerte Berührungsfläche zum Schnee oder dem Belag auf den Photovoltaikmodulen.

Die Erfindung betrifft auch noch eine Photovoltaikanlage zur Montage auf einem Dach, umfassen wenigstens eine Bahn aus, in eine Horizontalrichtung verlaufend aneinandergereihten Photovoltaikmodulen und wenigstens ein Schneefangsystem gemäß vorhergehender Beschreibung mit wenigstens einem Schneefangprofil.

Diesbezüglich kann vorteilhafterweise vorgesehen sein, dass wenigstens zwei Bahnen aus jeweils, in Horizontalrichtung verlaufend aneinandergereihten Photovoltaikmodulen und wenigstens zwei Schneefangsysteme ausgebildet sind, wobei einer, bezüglich einer Spornrichtung untersten ersten Bahn ein erstes Schneefangsystem zugeordnet ist, wobei das erste Schneefangsystem nächstliegend einer jeweiligen, in Spornrichtung gesehenen unteren Seitenfläche der Photovoltaikmodule der ersten Bahn klemmend positionsfixiert ist, wobei der elektrische Heizdraht des ersten Schneefangsystems an einer, der ersten Bahn zugewandten Seite eines zweiten Schenkels eines zugehörigen Schneefangprofils und wobei einer, bezüglich der Spornrichtung obersten zweiten Bahn ein zweites Schneefangsystem zugeordnet ist, wobei das zweite Schneefansystem nächstliegend einer jeweiligen, in Spornrichtung gesehenen oberen Seitenfläche der Photovoltaikmodule der zweiten Bahn klemmend positionsfixiert ist, wobei der elektrische Heizdraht des zweiten Schneefangsystems an der, der zweiten Bahn zugewandten Seite des zweiten Schenkels des zugehörigen Schneefangprofils festgelegt ist.

In diesem Zusammenhang kann es vorteilhaft sein, wenn jedes Schneefangsystem bezüglich der Anordnung des elektrischen Heizdrahtes gleich aufgebaut bzw. zusammengesetzt oder montiert ist. So kann jeweils der erste Schenkel an der Unterseite der zugehörigen Photovoltaikmodule klemmend festgelegt werden, wobei der elektrische Heizdraht jeweils auf der, den zugehörigen Photovoltaikmodulen zugewandten Seite des zweiten Schenkels festlegbar ist. Dadurch kann erreicht werden, dass die oberste Bahn einer Photovoltaikanlage genau wie jede weitere Bahn abgetaut wird und dass bereit auf der Oberfläche der obersten Bahn ein Wasserfilm unter dem Schneebrett entstehen kann, um das Abtauen und das Vorrutschen des Schneebretts in Richtung zum nächsten Schneefangsystem begünstigen zu können.

Entsprechend einer vorteilhaften Weiterbildung kann vorgesehen sein, dass jeder Bahn an deren jeweiligen Unterseite ein Schneefangsystem zugeordnet ist.

Insbesondere kann es vorteilhaft sein, wenn für jede Bahn ein einziger zusammenhängender elektrischer Heizdraht in Verwendung ist, wobei der elektrische Heizdraht zwischen den Bahnen mittels einer, an einer vertikalen Seitenfläche eines Photovoltaikmoduls, insbesondere an einem, in Bezug auf die Bahn außenliegenden Photovoltaikmoduls, im Speziellen an einem Rahmen dieses Photovoltaikmoduls, festlegbaren Führungstrasse überführt ist, wobei die Führungstrasse vorzugsweise eine U-förmige Aufnahme für den elektrischen Heizdraht und eine Lasche zum Festlegen am Photovoltaikmodul aufweist, wobei die Führungstrasse insbesondere kleben festgelegt ist.

In diesem Zusammenhang kann es vorteilhaft sein, wenn der elektrische Heizdraht meanderförmig zwischen den Bahnen an Photovoltaikmodulen montiert ist.

Ferner kann vorgesehen sein, dass Schneefangsysteme, die an einer unteren Seitenfläche von Photovoltaikmodulen einer Bahn nächstliegend festgelegt sind, mit einer, dessen zugehörigen Bahn abgewandten Seitenfläche des zweiten Schenkels eines Schneefangprofils an einer, in Spornrichtung gesehenen oberen Seitenfläche der unterhalb nächstliegenden Bahn an Photovoltaikmodulen anliegen, sodass durch Teilkonturdurchbrüche im zweiten Schenkel, die Anschlusslaschen für den elektrischen Heizdraht bilden, ein Wasserfilm durch Aufschmelzen von Schnee auf der Photovoltaikanlage auf die Oberfläche der unterhalb nächstliegenden Bahn an Photovoltaikmodulen aufbringbar ist.

Dadurch kann auf eine jeweils unterhalb eines Schneefangsystems nächstliegenden weiteren Bahn der Photovoltaikanlage ein Wasserfilm auf die Photovoltaikmodule dieser Bahn aufgebracht werden. Somit kann das Abschmelzen von Schnee oder eines Schneebretts auf der Photovoltaikanlage noch weiter verbessert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausgestaltungsform eines Schneefangsystems mit einem Schneefangprofil und einem elektrischen Heizdraht zur Montage an einem Photovoltaikmodul;
- Fig. 2: eine mögliche erste Ausgestaltungsform einer Photovoltaikanlage mit einem Schneefangsystem und einem Photovoltaikmodul;
- Fig. 3: eine mögliche zweite Ausgestaltungsform einer Photovoltaikanlage mit einem Schneefangsystem und einem Photovoltaikmodul;
- Fig. 4: eine mögliche Ausgestaltungsform einer Montageschnittstelle eines Schneefangprofils im Montagezustand und positionsfixiert relativ zu einem Photovoltaikmodul.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

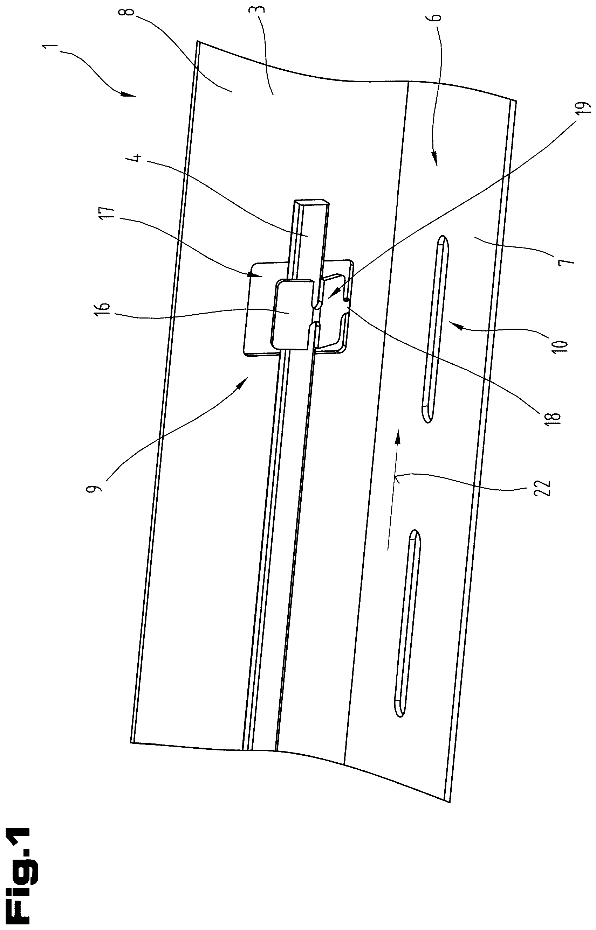

In der Fig. 1 ist eine mögliche Ausgestaltungsform eines Schneefangsystems 1 zum Abtauen eines Photovoltaikmoduls 2 (nicht dargestellt) mit einem Schneefangprofil 3 und einem elektrischen Heizdraht 4 zur Montage an dem Photovoltaikmodul 2 in stark vereinfachter, schematischer Darstellung gezeigt.

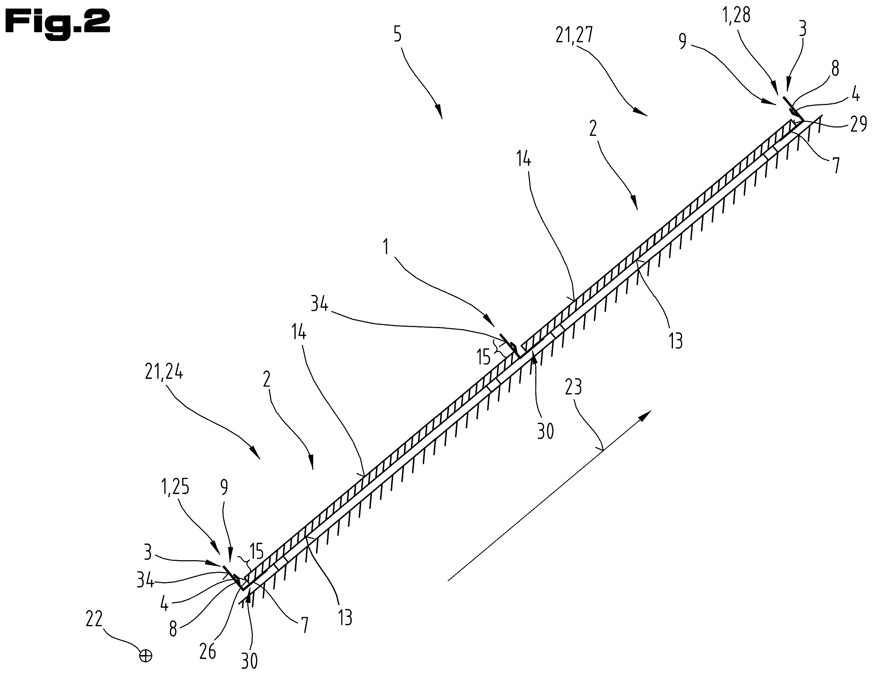

In der Fig. 2 ist eine mögliche erste Ausgestaltungsform einer Photovoltaikanlage 5 mit wenigstens einem derartigen Schneefangsystem 1 und wenigstens einem Photovoltaikmodul 2 in stark vereinfachter, schematischer Darstellung gezeigt.

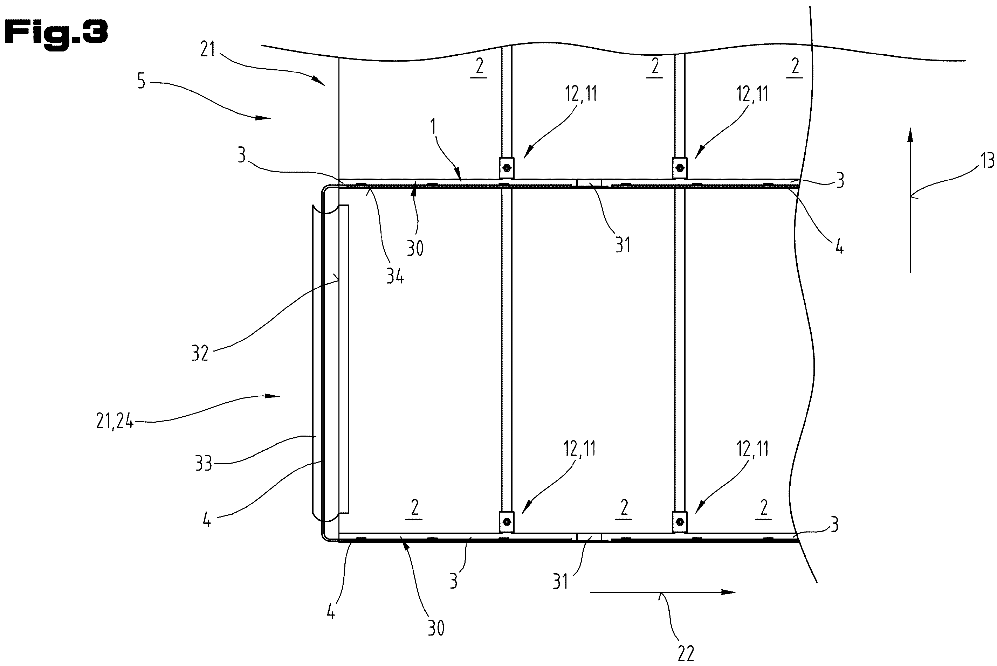

In der Fig. 3 ist eine mögliche zweite Ausgestaltungsform einer Photovoltaikanlage 5 mit wenigstens einem Schneefangsystem 1 und wenigstens einem Photovoltaikmodul 2 in stark vereinfachter, schematischer Darstellung gezeigt.

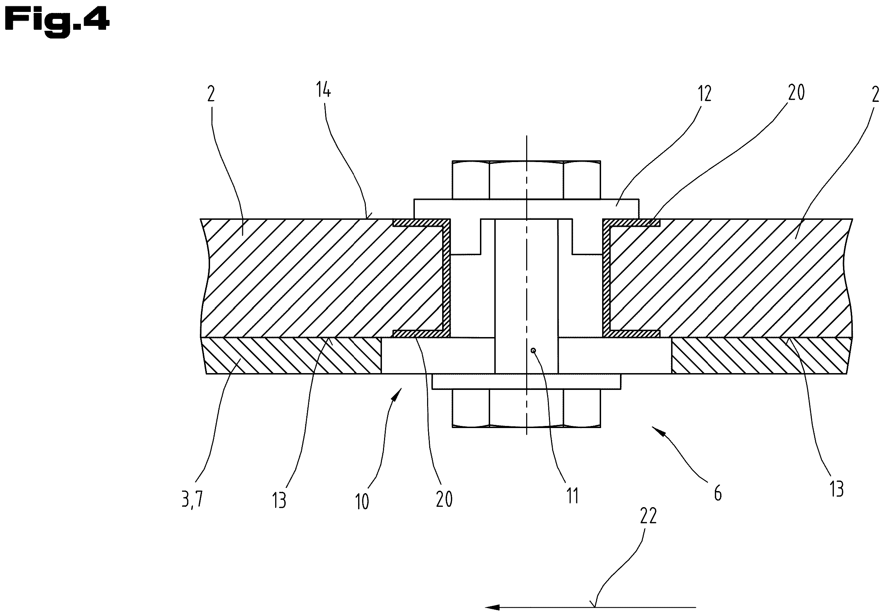

In der Fig. 4 ist eine mögliche Ausgestaltungsform einer Montageschnittstelle 6 eines Schneefangprofils 3 in stark vereinfachter, schematischer Darstellung gezeigt, wobei das Schneefangprofil 3 im Montagezustand und relativ zu einem Photovoltaikmodul 2 positionsfixiert ist.

Nachfolgende Figurenbeschreibung nimmt nicht explizit auf die einzelnen Darstellungen Bezug, sondern ist in einer Gesamtschau der Fig. 1 bis Fig. 3 zu lesen und zu verstehen, um so die Lesbarkeit und die Verständlichkeit der Ausführungen zu verbessern. In allen Darstellungen werden für gleiche Teile gleiche Bezugszeichen bzw. Bauteilbezeichnungen verwendet.

Das Schneefangprofil 3 ist zur Montage an einem Photovoltaikmodul 2 geeignet und umfasst einen ersten Schenkel 7 und einen, zum ersten Schenkel 7 in einem Winkel, insbesondere in einem Winkel von 90°, ausgerichteten zweiten Schenkel 8, wobei eine Montageschnittstelle 6 am ersten Schenkel 7 ausgebildet ist und eine Halteschnittstelle 9 für einen elektrischen Heizdraht 4 am zweiten Schenkel 8 ausgebildet ist, wobei das Schneefangprofil 3 mittels der Montageschnittstelle 6 relativ zum Photovoltaikmodul 2 positionsfixierbar ist, wobei ein Montagezustand definiert ist. Es kann vorgesehen sein, dass als Montageschnittstelle 6 im ersten Schenkel 7 ein Durchbruch 10 ausgebildet ist, wobei ein Befestigungsmittel 11 durch den Durchbruch 10 durchführbar ist, wobei der erste Schenkel 7 des Schneefangprofils 3 mittels dem Befestigungsmittel 11 im Zusammenwirken mit einem Klemmelement 12 gegen eine Rückseite 13 des Photovoltaikmoduls 2 anpressbar ist, sodass der erste Schenkel 7 des Schneefangprofils 3 relativ zum Photovoltaikmodul 2 an dessen Rückseite 13 klemmend festlegbar bzw. positionsfixierbar ist.

Für die Funktionsweise des Schneefangprofils 3 in Verbindung mit einem Photovoltaikmodul 2 auf einem Dach, kann es sinnvoll sein, wenn der zweite Schenkel 8 im Montagezustand mit einem Photovoltaikmodul 2 eine Oberfläche 14 des Photovoltaikmoduls 2 mit einem Überstandsbereich 15 überragbar bzw. überstehend ausgebildet ist, um als Schneefang zu wirken bzw. das Abrutschen oder Abgleiten von Schnee oder Eis entlang der Oberfläche 14 des Photovoltaikmoduls 2 zu erschweren oder zu unterbinden.

Um das Schneefangsystem 1, umfassend wenigstens ein Schneefangprofil 3 und einen elektrischen Heizdraht 4 ausbilden zu können, kann vorgesehen sein, dass als Halteschnittstelle 9 für den elektrischen Heizdraht 4 eine Anschlusslasche 16 im zweiten Schenkel 8 des Schneefangprofils 3 ausgebildet ist, wobei die Anschlusslasche 16 teilweise aus dem ersten Schenkel 7 konturgebend durch einen Teilkonturdurchbruch 17 getrennt und über einen Steg 18 mit dem zweiten Schenkel 8 verbunden ausgebildet ist, sodass die Halteschnittstelle 9 durch werkzeugloses Auskragen der Anschlusslasche 16 relativ zum ersten Schenkel 7 für das Aufnehmen des elektrischen Heizdrahtes 4 ausbildbar ist.

Insbesondere kann für die Funktionsweise der Halteschnittstelle 9 vorgesehen sein, dass die Anschlusslasche 16 einen Biegebereich 19 umfasst, wobei die Anschlusslasche 16 durch den Biegebereich 19 insbesondere mittig geteilt ist, sodass die Anschlusslasche 16 im Biegebereich 19 werkzeuglos verbiegbar ist, sodass der elektrische Heizdraht 4 nach Aufnahme in der Halteschnittstelle 9 durch Verbiegen der Anschlusslasche 16 im Biegebereich 19 zwischen der Anschlusslasche 16 und dem zweiten Schenkel 8 festlegbar ist.

In Bezug auf die Funktionsweise des Schneefangsystems 1 für bzw. bei einer Photovoltaikanlage 5 kann vorgesehen sein, dass der Teilkonturdurchbruch 17 überwiegend im Überstandsbereich 15 ausgebildet ist, sodass der elektrische Heizdraht 4 abschnittsweise im Überstandsbereich 15 montierbar ist. In diesem Zusammenhang kann es auch sinnvoll sein, wenn der erste Schenkel 7 des Schneefangprofils 3 mittels dem Befestigungsmittel 11 im Zusammenwirken mit einem Klemmelement 12 gegen Rückseiten 13 von zwei nächstliegenden Photovoltaikmodulen 2 anpressbar ist, sodass der erste Schenkel 7 des Schneefangprofils 3 relativ zu den Photovoltaikmodulen 2 an deren Rückseite 13 klemmend festlegbar bzw. positionsfixierbar ist, wobei das Klemmelement 12 vorzugsweise an Rahmenabschnitten 20 im Bereich einer Fuge zwischen zwei nächstliegenden Photovoltaikmodulen 2 montierbar ist.

In diesem Zusammenhang kann es insbesondere sinnvoll sein, wenn der elektrische Heizdraht 4 als abgeflachter Heizdraht 4 ausgebildet ist und mit einer Flachseite parallel zum zweiten Schenkel 8 eines Schneefangprofils 3 positioniert ist, sodass eine Heizfläche des elektrischen Heizdrahtes 4 in Höhenrichtung bzw. quer zur Oberfläche 14 eines Photovoltaikmoduls 2 vergrößert ist.

Eine Photovoltaikanlage 5 kann in diesem Sinne wenigstens eine Bahn 21 aus, in eine Horizontalrichtung 22 verlaufend aneinandergereihten Photovoltaikmodulen 2 und wenigstens ein Schneefangsystem 1 gemäß der vorhergehenden Beschreibung mit wenigstens einem Schneefangprofil 3 umfassen. Zweckmäßig wäre, wenn wenigstens zwei Bahnen 21 aus jeweils, in Horizontalrichtung 22 verlaufend aneinandergereihten Photovoltaikmodulen 2 und wenigstens zwei Schneefangsysteme 1 bei der Photovoltaikanlage 5 ausgebildet sind, wobei einer, bezüglich einer Spornrichtung 23 untersten ersten Bahn 24 ein erstes Schneefangsystem 25 zugeordnet ist, wobei das erste Schneefangsystem 25 nächstliegend einer jeweiligen, in Spornrichtung 23 gesehenen unteren Seitenfläche 26 der Photovoltaikmodule 2 der ersten Bahn 24 klemmend positionsfixiert ist, wobei der elektrische Heizdraht 4 des ersten Schneefangsystems 25 an einer, der ersten Bahn 24 zugewandten Seite eines zweiten Schenkels 8 eines zugehörigen Schneefangprofils 3 festgelegt ist. Weiters kann es vorteilhaft sein, dass einer, bezüglich der Spornrichtung 23 obersten zweiten Bahn 27 der Photovoltaikanlage 5 ein zweites Schneefangsystem 28 zugeordnet ist, wobei das zweite Schneefangsystem 28 nächstliegend einer jeweiligen, in Spornrichtung 23 gesehenen oberen Seitenfläche 29 der Photovoltaikmodule 2 der zweiten Bahn 27 klemmend positionsfixiert ist, wobei der elektrische Heizdraht 4 des zweiten Schneefangsystems 28 an der, der zweiten Bahn 27 zugewandten Seite des zweiten Schenkels 8 des zugehörigen Schneefangprofils 3 festgelegt ist.

Als sinnvolle Erweiterung dazu kann, vorgesehen sein, dass jeder Bahn 21 an deren jeweiligen Unterseite 30 ein Schneefangsystem 1 zugeordnet ist.

Jedenfalls ist es auch möglich, dass eine Photovoltaikanlage 5 eine Ausdehnung in Horizontalrichtung 22 von mehreren Photovoltaikmodulen 2 aufweist. In Bezug auf die Wärmeausdehnung einen Schneefangprofils 3, das vorzugsweise aus unbeschichtetem Aluminium ausgebildet sein kann, und auch aus wirtschaftlichen Gründen kann es sinnvoll sein, wenn ein jeweiliges Schneefangsystem 1 aus wenigstens zwei mittels Winkelprofil 31 gekoppelten Schneefangprofilen 3, wobei jedes Schneefangprofile 3 mehrere Durchbrüche der Montageschnittstelle 6 umfasst, die als Langloch ausgebildet sind und wobei Durchbrüche der Montageschnittstelle 6 für die Kopplung vorgesehen sind, sodass die Wärmeausdehnung der Schneefangprofile 3 im Bereich des Winkelprofils 31 aufnehmbar ist und sodass das Schneefangsystem 1 auf eine beliebige Länge eine horizontal verlaufenden Bahn 21 von Photovoltaikmodulen 2 verlängerbar ist.

Sinnvollerweise kann auch vorgesehen sein, dass für jede Bahn 21 ein einziger zusammenhängender elektrischer Heizdraht 4 in Verwendung ist, wobei der elektrische Heizdraht 4 zwischen den Bahnen 21 mittels einer, an einer vertikalen Seitenfläche 32 eines Photovoltaikmoduls 2, insbesondere an einem, in Bezug auf die Bahn 21 außenliegenden Photovoltaikmodul 2, im Speziellen an einem Rahmen dieses Photovoltaikmoduls 2, festlegbaren Führungstrasse 33 überführt ist, wobei die Führungstrasse 33 vorzugsweise eine U-förmige Aufnahme für den elektrischen Heizdraht 4 und eine Lasche zum Festlegen am Photovoltaikmodul 2 aufweist, wobei die Führungstrasse 33 bzw. die Lasche Führungstrasse 33 der insbesondere klebend am Photovoltaikmodul 2 festgelegt ist.

Um das Abschmelzen von Schnee effektiv zu gestalten, kann es insbesondere vorteilhaft sein, dass Schneefangsysteme 1, die an einer unteren Seitenfläche 26 von Photovoltaikmodulen 2 einer Bahn 21 nächstliegend festgelegt sind, mit einer, dessen zugehörigen Bahn 21 abgewandten Seitenfläche 34 des zweiten Schenkels 8 eines Schneefangprofils 3 an einer, in Spornrichtung 23 gesehenen oberen Seitenfläche 29 der unterhalb nächstliegenden Bahn 21 an Photovoltaikmodulen 2 anliegen, sodass durch Teilkonturdurchbrüche 17 im zweiten Schenkel 8, die Anschlusslaschen 16 für den elektrischen Heizdraht 4 bilden, ein Wasserfilm durch Aufschmelzen von Schnee auf der Photovoltaikanlage 5 auf die Oberfläche 14 der unterhalb nächstliegenden Bahn 21 an Photovoltaikmodulen 2 aufbringbar ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Schneefangsystem | 32 | Seitenfläche |
| 2 | Photovoltaikmodul | 33 | Führungstrasse |
| 3 | Schneefangprofil | 34 | Seitenfläche |
| 4 | Heizdraht | | |
| 5 | Photovoltaikanlage | | |
| 6 | Montageschnittstelle | | |
| 7 | Erster Schenkel | | |
| 8 | Zweiter Schenkel | | |
| 9 | Halteschnittstelle | | |
| 10 | Durchbruch | | |
| 11 | Befestigungsmittel | | |
| 12 | Klemmelement | | |
| 13 | Rückseite | | |
| 14 | Oberfläche | | |
| 15 | Überstandsbereich | | |
| 16 | Anschlusslasche | | |
| 17 | Teilkonturdurchbruch | | |
| 18 | Steg | | |
| 19 | Biegebereich | | |
| 20 | Rahmenabschnitt | | |
| 21 | Bahn | | |
| 22 | Horizontalrichtung | | |
| 23 | Spornrichtung | | |
| 24 | Erste Bahn | | |
| 25 | Erstes Schneefangsystem | | |
| 26 | Untere Seitenfläche | | |
| 27 | Zweite Bahn | | |
| 28 | Zweites Schneefangsystem | | |
| 29 | Seitenfläche | | |
| 30 | Unterseite | | |
| 31 | Winkelprofil | | |

## Patentansprüche

1. Schneefangprofil (3) zur Montage an einem Photovoltaikmodul (2) mit einem ersten Schenkel (7) und einem, zum ersten Schenkel (7) in einem Winkel, insbesondere in einem Winkel von 90°, ausgerichteten zweiten Schenkel (8), wobei eine Montageschnittstelle (6) am ersten Schenkel (7) ausgebildet ist und eine Halteschnittstelle (9) für einen elektrischen Heizdraht (4) am zweiten Schenkel (8) ausgebildet ist,
**dadurch gekennzeichnet, dass** das Schneefangprofil (3) mittels der Montageschnittstelle (6) relativ zum Photovoltaikmodul (2) positionsfixierbar ist, wobei ein Montagezustand definiert ist.

2. Schneefangprofil (3) nach Anspruch 1, **dadurch gekennzeichnet, dass** als Montageschnittstelle (6) im ersten Schenkel (7) ein Durchbruch (10) ausgebildet ist, wobei ein Befestigungsmittel (11) durch den Durchbruch (10) durchführbar ist, wobei der erste Schenkel (7) des Schneefangprofils (3) mittels dem Befestigungsmittel (11) im Zusammenwirken mit einem Klemmelement (12) gegen eine Rückseite (13) des Photovoltaikmoduls (2) anpressbar ist, sodass der erste Schenkel (7) des Schneefangprofils (3) relativ zum Photovoltaikmodul (2) an dessen Rückseite (13) klemmend festlegbar bzw. positionsfixierbar ist.

3. Schneefangprofil (3) nach einem der vorhergehenden Ansprüche, **dadurch gekennzeichnet, dass** der zweite Schenkel (8) im Montagezustand mit einem Photovoltaikmodul (2) eine Oberfläche (14) des Photovoltaikmoduls (2) mit einem Überstandsbereich (15) überragbar bzw. überstehend ausgebildet ist, um als Schneefang zu wirken bzw. das Abrutschen oder Abgleiten von Schnee oder Eis entlang der Oberfläche (14) des Photovoltaikmoduls (2) zu erschweren oder zu unterbinden.

4. Schneefangprofil (3) nach einem der vorhergehenden Ansprüche, **dadurch gekennzeichnet, dass** als Halteschnittstelle (9) für den elektrischen Heizdraht (4) eine Anschlusslasche (16) im zweiten Schenkel (8) des Schneefangprofils (3) ausgebildet ist, wobei die Anschlusslasche (16) teilweise aus dem ersten Schenkel (7) konturgebend durch einen Teilkonturdurchbruch (17) getrennt und über einen Steg (18) mit dem zweiten Schenkel (8) verbunden ausgebildet ist, sodass die Halteschnittstelle (9) durch werkzeugloses Auskragen der Anschlusslasche (16) relativ zum ersten Schenkel (7) für das Aufnehmen des elektrischen Heizdrahtes (4) ausbildbar ist.

5. Schneefangprofil (3) nach Anspruch 4, **dadurch gekennzeichnet, dass** die Anschlusslasche (16) einen Biegebereich (19) umfasst, wobei die Anschlusslasche (16) durch den Biegebereich (19) insbesondere mittig geteilt ist, sodass die Anschlusslasche (16) im Biegebereich (19) werkzeuglos verbiegbar ist, sodass der elektrische Heizdraht (4) nach Aufnahme in der Halteschnittstelle (9) durch Verbiegen der Anschlusslasche (16) im Biegebereich (19) zwischen der Anschlusslasche (16) und dem zweiten Schenkel (8) festlegbar ist.

6. Schneefangprofil (3) nach Anspruch 3 und einem der Ansprüche 4 oder 5 **dadurch gekennzeichnet, dass** der Teilkonturdurchbruch (17) überwiegend im Überstandsbereich (15) ausgebildet ist, sodass der elektrische Heizdraht (4) abschnittsweise im Überstandsbereich (15) montierbar ist.

7. Schneefangprofil (3) nach einem der vorhergehenden Ansprüche, **dadurch gekennzeichnet, dass** das Schneefangprofil (3) aus unbeschichtetem Aluminium ausgebildet ist.

8. Schneefangsystem (1) zum Abtauen eines Photovoltaikmoduls (2) umfassend wenigstens ein Schneefangprofil (3) gemäß einem der Ansprüche 1 bis7 und einen elektrischen Heizdraht (4), wobei das wenigstens eine Schneefangprofil (3) einen ersten Schenkel (7) und einem, zum ersten Schenkel (7) in einem Winkel, insbesondere in einem Winkel von 90°, ausgerichteten zweiten Schenkel (8) umfasst, wobei eine Montageschnittstelle (6) am ersten Schenkel (7) ausgebildet ist und eine Halteschnittstelle (9) für den elektrischen Heizdraht (4) am zweiten Schenkel (8) ausgebildet ist, **dadurch gekennzeichnet, dass** das Schneefangsystem (1) lastabtragend an wenigstens einem Photovoltaikmodul (2) festgelegt bzw. positionsfixiert ist.

9. Schneefangsystem (1) nach Anspruch 8, **dadurch gekennzeichnet, dass** als Montageschnittstelle (6) im ersten Schenkel (7) ein Durchbruch (10) ausgebildet ist, wobei ein Befestigungsmittel (11) durch den Durchbruch (10) durchführbar ist, wobei der erste Schenkel (7) des Schneefangprofils (3) mittels dem Befestigungsmittel (11) im Zusammenwirken mit einem Klemmelement (12) gegen Rückseiten (13) von zwei nächstliegenden Photovoltaikmodulen (2) anpressbar ist, sodass der erste Schenkel (7) des Schneefangprofils (3) relativ zu den Photovoltaikmodulen (2) an deren Rückseite (13) klemmend festlegbar bzw. positionsfixierbar ist, wobei das Klemmelement (12) vorzugsweise an Rahmenabschnitten (20) im Bereich einer Fuge zwischen zwei nächstliegenden Photovoltaikmodulen (2) montierbar ist.

10. Schneefangsystem (1) nach einem der Ansprüche 8 oder 9, **gekennzeichnet durch** wenigstens zwei mittels Winkelprofil (31) gekoppelten Schneefangprofile (3), wobei jedes Schneefangprofile (3) mehrere Durchbrüche der Montageschnittstelle (6) umfasst, die als Langloch ausgebildet sind und wobei Durchbrüche der Montageschnittstelle (6) für die Kopplung vorgesehen sind, sodass die Wärmeausdehnung der Schneefangprofile (3) im Bereich des Winkelprofils (31) aufnehmbar ist und sodass das Schneefangsystem (1) auf eine beliebige Länge eine horizontal verlaufenden Bahn (21) von Photovoltaikmodulen (2) verlängerbar ist.

11. Schneefangsystem (1) nach einem der Ansprüche 8 bis 10, **dadurch gekennzeichnet, dass** der elektrische Heizdraht (4) als abgeflachter Heizdraht (4) ausgebildet ist und mit einer Flachseite parallel zum zweiten Schenkel (8) eines Schneefangprofils (3) positioniert ist, sodass eine Heizfläche des elektrischen Heizdrahtes (4) in Höhenrichtung vergrößert ist.

12. Photovoltaikanlage (5) zur Montage auf einem Dach, umfassen wenigstens eine Bahn (21) aus, in eine Horizontalrichtung (22) verlaufend aneinandergereihten Photovoltaikmodulen (2) und wenigstens ein Schneefangsystem (1) gemäß einem der Ansprüche 8 bis 11 mit wenigstens einem Schneefangprofil (3).

13. Photovoltaikanlage (5) nach Anspruch 12, **dadurch gekennzeichnet, dass** wenigstens zwei Bahnen (21) aus jeweils, in Horizontalrichtung (22) verlaufend aneinandergereihten Photovoltaikmodulen (2) und wenigstens zwei Schneefangsysteme (1) ausgebildet sind, wobei einer, bezüglich einer Spornrichtung (23) untersten ersten Bahn (24) ein erstes Schneefangsystem (25) zugeordnet ist, wobei das erste Schneefangsystem (25) nächstliegend einer jeweiligen, in Spornrichtung (23) gesehenen unteren Seitenfläche (26) der Photovoltaikmodule (2) der ersten Bahn (24) klemmend positionsfixiert ist, wobei der elektrische Heizdraht (4) des ersten Schneefangsystems (25) an einer, der ersten Bahn (24) zugewandten Seite eines zweiten Schenkels (8) eines zugehörigen Schneefangprofils (3) festgelegt ist, und wobei einer, bezüglich der Spornrichtung (23) obersten zweiten Bahn (27) ein zweites Schneefangsystem (28) zugeordnet ist, wobei das zweite Schneefangsystem (28) nächstliegend einer jeweiligen, in Spornrichtung (23) gesehenen oberen Seitenfläche (29) der Photovoltaikmodule (2) der zweiten Bahn (27) klemmend positionsfixiert ist, wobei der elektrische Heizdraht (4) des zweiten Schneefangsystems (28) an der, der zweiten Bahn (27) zugewandten Seite des zweiten Schenkels (8) des zugehörigen Schneefangprofils (3) festgelegt ist.

14. Photovoltaikanlage (5) nach Anspruch 13, **dadurch gekennzeichnet, dass** jeder Bahn (21) an deren jeweiligen Unterseite (30) ein Schneefangsystem (1) zugeordnet ist.

15. Photovoltaikanlage (5) nach einem der Ansprüche 13 oder 14, **dadurch gekennzeichnet, dass** für jede Bahn (21) ein einziger zusammenhängender elektrischer Heizdraht (4) in Verwendung ist, wobei der elektrische Heizdraht (4) zwischen den Bahnen (21) mittels einer, an einer vertikalen Seitenfläche (32) eines Photovoltaikmoduls (2), insbesondere an einem, in Bezug auf die Bahn (21) außenliegenden Photovoltaikmodul (2), im Speziellen an einem Rahmen dieses Photovoltaikmoduls (2), festlegbaren Führungstrasse (33) überführt ist, wobei die Führungstrasse (33) vorzugsweise eine U-förmige Aufnahme für den elektrischen Heizdraht (4) und eine Lasche zum Festlegen am Photovoltaikmodul (2) aufweist, wobei die Führungstrasse (33) bzw. die Lasche Führungstrasse (33) der insbesondere klebend am Photovoltaikmodul (2) festgelegt ist.

16. Photovoltaikanlage (5) nach einem der Ansprüche 13 bis 15, **dadurch gekennzeichnet, dass** Schneefangsysteme (1), die an einer unteren Seitenfläche (26) von Photovoltaikmodulen (2) einer Bahn (21) nächstliegend festgelegt sind, mit einer, dessen zugehörigen Bahn (21) abgewandten Seitenfläche (34) des zweiten Schenkels (8) eines Schneefangprofils (3) an einer, in Spornrichtung (23) gesehenen oberen Seitenfläche (29) der unterhalb nächstliegenden Bahn (21) an Photovoltaikmodulen (2) anliegen, sodass durch Teilkonturdurchbrüche (17) im zweiten Schenkel (8), die Anschlusslaschen (16) für den elektrischen Heizdraht (4) bilden, ein Wasserfilm durch Aufschmelzen von Schnee auf der Photovoltaikanlage (5) auf die Oberfläche (14) der unterhalb nächstliegenden Bahn (21) an Photovoltaikmodulen (2) aufbringbar ist.
